(19) Europäisches Patentamt
European Patent Office
Office européen des brevets

(11) EP 0 888 392 B1

(12) **FASCICULE DE BREVET EUROPEEN**

(45) Date de publication et mention de la délivrance du brevet:
**11.05.2011 Bulletin 2011/19**

(21) Numéro de dépôt: **97914403.7**

(22) Date de dépôt: **14.03.1997**

(51) Int Cl.:
***C08F 220/18*** *(2006.01)* ***C10L 1/196*** *(2006.01)*
***C10L 1/236*** *(2006.01)* *C08F 226/06 (2006.01)*

(86) Numéro de dépôt international:
**PCT/FR1997/000464**

(87) Numéro de publication internationale:
**WO 1997/034940 (25.09.1997 Gazette 1997/41)**

# (54) COPOLYMERES ACRYLIQUES COMME ADDITIFS POUR L'INHIBITION DU DEPOT DE PARAFFINES DANS LES HUILES BRUTES ET COMPOSITIONS LES CONTENANT

ACRYLAT COPOLYMERE ALS ZUSATZMITTEL FÜR DIE VERHINDERUNG DER ABLAGERUNG VON PARAFFIN IN ROHÖL UND DIESEN ENTHALTENDE ZUSAMMENSETZUNGEN

ACRYLIC COPOLYMERS AS ADDITIVES FOR INHIBITING PARAFFIN DEPOSITION IN CRUDE OILS, AND COMPOSITIONS CONTAINING SAME

(84) Etats contractants désignés:
**DE FR GB IT NL**

(30) Priorité: **21.03.1996 FR 9603534**
**21.03.1996 FR 9603535**

(43) Date de publication de la demande:
**07.01.1999 Bulletin 1999/01**

(73) Titulaire: **CECA S.A.**
**92250 La Garenne Colombes (FR)**

(72) Inventeurs:
- **BRUNELLI, Jean-François**
**F-91850 Bouray-sur-Juine (FR)**
- **FOUQUAY, Stéphane**
**F-76130 Mont-Saint-Aignan (FR)**

(74) Mandataire: **Lhoste, Catherine et al**
**ARKEMA FRANCE**
**Département Propriété Industrielle**
**420 Rue d'Estienne d'Orves**
**92705 Colombes Cedex (FR)**

(56) Documents cités:
**FR-A- 2 128 589 US-A- 2 839 512**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 0 888 392 B1

Printed by Jouve, 75001 PARIS (FR)

## Description

DOMAINE TECHNIOUE

Le domaine de l'invention ici décrite est celui des huiles brutes de pétrole et des additifs destinés à en améliorer les conditions d'exploitation.

Les huiles brutes peuvent contenir des fractions importantes de paraffines, dont la quantité et la nature exacte sont variables selon les champs d'extraction. A la température du puits les paraffines sont liquides et dissoutes dans l'huile brute. Lors de la remontée de l'huile en surface, sa température s'abaisse et les paraffines en cristallisant forment un réseau tridimensionnel d'aiguilles et d'écailles. Il en résulte une perte de fluidité qui rend la production, le transport, le stockage et même le traitement de ces huiles très difficiles. Les bouchages au niveau des pipelines et des appareils de traitement sont fréquents.

TECHNIQUE ANTERIEURE

On a proposé de nombreux procédés pour résoudre ce problème, comme le raclage mécanique ou bien le chauffage des parois. Ces procédés sont coûteux et leur mise en oeuvre n'est pas toujours possible.

Pour améliorer la rhéologie des pétroles bruts, SHELL a fait oeuvre de pionnier avec FR 1.575.984 : elle enseigne que des composés macromoléculaires de type "peignes" construits sur le modèle d'une chaîne principale hydrocarbonée sur laquelle sont greffées des chaînes latérales elles-mêmes hydrocarbonées assez longues, c'est-à-dire d'au moins 14 atomes de carbones et 30 atomes de carbones au plus, peuvent perturber la cristallisation des paraffines lourdes. Cette propriété se développe bien dans les macromolécules dont la masse moléculaire moyenne (masse moléculaire en nombre Mn, dont on rappelle la définition

$$Mn = \Sigma_i \; NiMi / \Sigma_i \; Ni,$$

où les Mi sont les masses moléculaires des Ni espèces individuelles présentes dans le polymère) est comprise entre 1.000 et 1.000.000, et de préférence entre 4.000 et 100.000. On a donc suggéré l'utilisation d'additifs, le plus souvent polymériques dont le rôle est de retarder ou de modifier la cristallisation des paraffines et de ce fait d'améliorer les propriétés d'écoulement de l'huile et d'empêcher l'agglomération des cristaux formés sur les parois.

De nombreux travaux ont ensuite essayé d'améliorer l'efficacité de ces premiers additifs de nature polymérique soit par la synthèse soit par la formulation, afin de les adapter aux différents types d'huiles brutes rencontrées, et de pallier successivement les difficultés de synthèse et/ou de manipulation des différentes générations de produits comme par exemple parmi les plus efficaces, les copolymères des acrylates $C_{18-30}$, de préférence majoritairement $C_{20-22}$, avec un monomère hétérocyclique notamment la vinylpyridine [brevets US 2, 839, 512 (1958) et FR 2.128.589 (1972) de SHELL]. La présence de motifs polaires confère un caractère dispersant au copolymère, qui permet d'éviter la déposition des paraffines sur les parois. Or à cause de la réactivité plus élevée des acrylates à chaîne longue par rapport à celle des comonomères polaires, l'incorporation de ces derniers est généralement très difficile et l'effet dispersant, lié au taux d'incorporation du comonomère polaire, reste donc souvent très faible.

Malgré ces améliorations successives, ces additifs ne peuvent s'appliquer de manière universelle à l'ensemble des huiles brutes, chacune d'elles étant un cas particulier et posant son problème propre.

EXPOSE DE L'INVENTION

On vient de trouver, de façon très inattendue, que l'on améliorait considérablement les performances des inhibiteurs de paraffines de type copolymères acrylates d'alkyles ou copolymères acrylates d'alkyles / vinylpyridine, lorsqu'une partie des motifs monomères acrylates d'alkyle participant à la chaîne polymère, motifs représentables par

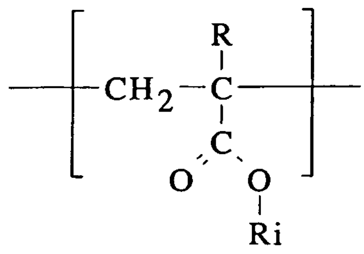

dans lesquels R est H ou CH3,
dans lesquels les Ri sont des restes d'alcools aliphatiques linéaires saturés Ri-OH, dont le nombre d'atomes de carbone s'étend de 10 à 50, provient d'une coupe acrylique présentant une distribution particulière des chaînes alkyles, dénommée pour les propos du présent brevet distribution "U". On entend par distribution "U" la distribution des chaînes alkyles en fonction de la longueur des chaînes, ici toutes à nombre pair de carbone, dont l'enveloppe est très régulière, dont la masse moléculaire moyenne en poids Mw est comprise entre 375 et 840, dont la masse moléculaire moyenne en nombre Mn est comprise entre 375 et 700, et dont le facteur de polydispersité Mw / Mn est compris entre 1,0 et 1,2 (Mw est la masse moléculaire en poids dont on rappelle la formule de calcul

$$Mw = \Sigma_i NiMi^2 / \Sigma_i NiMi,$$

où les Mi sont les masses moléculaires des Ni espèces individuelles présentes dans le polymère). La figure 1 donne une représentation de la répartition d'alcools distribués selon une telle loi de répartition "U" avec une masse moléculaire moyenne de 425 (pour l'obtention de tels alcools, voir US 4,426,329). Les acrylates polymères obtenus par seule polymérisation de monomères à distribution "U" ne se distinguent pas particulièrement de ceux que l'on obtient à partir de monomères arbitraires, entendons par là des produits habituellement disponibles pour l'homme du métier et dans lesquels on ne recherche aucune distribution particulière des longueurs des chaînes pendantes, autrement dit dont la distribution est quelconque, en tous cas, n'est pas une distribution "U". Ce qui est très étonnant, et ce dont la demanderesse tire toutes les conséquences avantageuses, est qu'il se développe une synergie puissante quant à l'inhibition de la cristallisation des paraffines dans les huiles de pétrole, lorsque des produits de la classe "U" et de la classe "Non-U" se trouvent répartis au sein du même copolymère polyacrylique ou polyacrylique / vinylpyridine. Comme toute synergie dans des mélanges qui peuvent être fort variables en composition, les règles en sont délicates à cerner, mais les principes directeurs peuvent en être énoncés, qui seront de la plus haute utilité pour l'homme du métier : les composants "U" sont centrés sur des longueurs moyennes de chaînes pendantes $i_u$ plus fortes que celles $i_{nu}$ des composants "Non-U", et le poids dans le copolymère de l'ensemble des motifs à chaînes "U" est relativement faible par rapport à celui de l'ensemble des motifs "Non-U". Au sens de l'invention, vinylpyridine s'entend comme 2-vinylpyridine, 4-vinylpyridine, ou le mélange des deux. Les copolymères de l'invention en contiennent éventuellement de 1 à 10% en poids.

En termes de description structurale, on peut dire que font partie de l'invention les copolymères (méth)acrylate d'alkyle ou les copolymères (méth)acrylate d'alkyle / vinylpyridine de masse moléculaire en poids Mw mesurée par GPC comprise entre 5.000 et 500.000, de préférence entre 40.000 et 350.000, dont la polydispersité Pd peut varier entre 1,5 et 7,5 dont les motifs monomères (méth)acrylates qui participent à la chaîne polymère sont des motifs

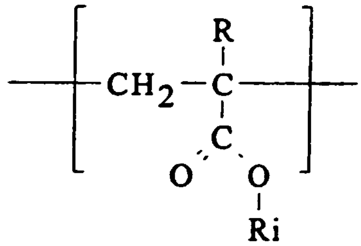

dans lesquels R est H ou CH3,
dans lesquels les Ri sont des restes d'alcools aliphatiques linéaires saturés Ri-OH où i représente le nombre de carbones de ces restes qui s'étale entre 10 et 50 atomes de carbones, et suivent une loi de répartition qui est la superposition

d'une loi de répartition "U", dans laquelle les i sont des nombres pairs développés sur la partie haute 24-50 de l'intervalle, dont la valeur centrée est $i_u$, et d'une loi de répartition "Non-U", dans laquelle les i sont des nombres pairs ou impairs développés sur la partie basse 10-22 de l'intervalle et dont la valeur centrée $i_{nu}$ est telle que $i_{nu} < i_u$,
le rapport pondéral de l'ensemble des motifs

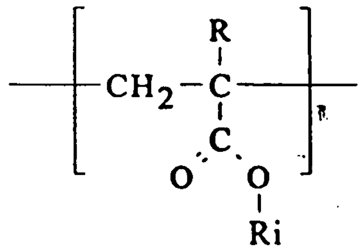

à Ri distribués selon la loi "U" à l'ensemble des motifs distribués selon la loi "Non-U" allant de 1:99 à moins de 50:50, et préférentiellement de 5:95 à moins de 50 : 50.

Les formulations d'inhibiteurs de paraffines incorporant ces copolymères comme composants essentiels pallient les inconvénients précédemment cités et permettent la réalisation d'une série d'additifs à large spectre d'utilisation dotés d'une bonne solubilité dans les huiles brutes, lesquels ont d'ailleurs un effet aussi bien sur la cristallisation des paraffines que sur la dispersion des cristaux déjà formés. Ils retardent la cristallisation des paraffines dont la distribution se termine généralement entre C60 et C70, permettent l'abaissement du point d'écoulement et de la viscosité de ces huiles et en facilitent le transport, le stockage et le traitement. Ils s'incorporent facilement dans les huiles brutes d'origines très diverses.

MANIERE DE REALISER L'INVENTION

Les copolymères selon l'invention peuvent être obtenus selon un procédé de polymérisation simple et peu contraignant. L'invention offre ainsi à l'homme du métier, la possibilité de sélectionner par des essais de simple routine, la coupe d'alkanols polymériques qui présentera la meilleure similitude avec l'huile brute à traiter et qui correspondra à la meilleure efficacité. Des résultats en ce sens sont présentés dans les exemples.

Les meilleurs résultats sont obtenus avec les copolymères statistiques d'acrylates d'alcools "U" et "Non-U" ou d'acrylates d'alcools "U" et "Non-U" et de vinylpyridine qui renferment de 5 à moins de 50% de monomères "U" centrés de $C_{24}$ à $C_{50}$, les caractéristiques et l'efficacité des copolymères étant définis par le choix du couple solvant / initiateur. Les comonomères "U" préférés sont les acrylates d'alcools centrés entre $C_{30}$ et $C_{40}$.

On obtient l'additif polymérique selon l'invention par polymérisation des monomères dans le toluène, le xylène, et d'une façon générale, dans tout solvant aliphatique ou aromatique de point d'ébullition inférieur à 300°C, chimiquement inerte vis-à-vis des monomères, dans lequel tant les monomères (esters (méth)acryliques ou alcools de chacune des catégories de distribution « U » et « Non-U », suivi de leur estérification par l'acide (méth)acryliques) que le copolymère sont solubles. La température de polymérisation peut varier assez largement en fonction de l'initiateur radicalaire utilisé, par exemple entre 50 et 150°C et de préférence entre 70 et 120°C. La pression peut varier entre la pression atmosphérique et les pressions inférieures ou égales à 30 bars.

La présence de 1 à 10% en poids de motifs 2-vinylpyridine et/ou de 4-vinylpyridine dans les chaînes des copolymères selon l'invention en améliore sensiblement l'efficacité, au moins à l'égard de certains types d'huiles. Un exemple en est rapporté plus loin.

Les catalyseurs sont choisis généralement parmi les composés générateurs de radicaux libres solubles dans le milieu réactionnel comme par exemple les peroxydes tels que les peroxydes de benzoyle, d'acétyle, de ditertiobutyle, le perbenzoate de tertiobutyle, le peroctoacte de tertiobutyle ou les composés azoïques comme l'azo-bis-isobutyronitrile. On utilise en général $10^{-5}$ à $10^{-1}$ mole de catalyseur et de préférence de $5.10^{-4}$ à $10^{-2}$ mole par mole de monomère.

La concentration globale en monomère dans le solvant peut aller de 10 à 90 % en poids, les concentrations préférées allant de 20 à 70 % afin de maîtriser la masse moléculaire et la pompabilité des solutions contenant l'additif polymérique. Le degré de polymérisation est mesuré par chromatographie par perméation de gel (GPC) laquelle permet d'atteindre les masses moléculaires en poids Mw et en nombre Mn en équivalent polystyrène et l'indice de polydispersité Pd du polymère.

Les masses moléculaires en poids Mw et en nombre Mn du copolymère final utilisé seul ou en association avec un second copolymère selon l'invention peuvent varier dans de larges limites suivant la nature du brut à traiter, soit entre 5.000 et 500.000 pour le Mw, de préférence de 40.000 à 350.000, pour une polydispersité Pd pouvant varier entre 1,5 et 7,5.

APPLICATION INDUSTRIELLE

Les copolymères selon l'invention sont utilisés dans les huiles brutes à des doses pouvant varier dans de larges limites, suivant la nature, la structure et la masse moléculaire du copolymère à utiliser, la nature et la quantité de cires de paraffines présentes dans l'huile brute et la performance souhaitée en abaissement de point d'écoulement ; celles-ci peuvent varier de 5 à 5.000 ppm en poids, préférentiellement de 10 à 2.000 ppm. Ils ont une influence favorable sur la rhéologie des huiles brutes, en particulier sur leurs caractéristiques de viscosité en fonction de la température et du module de cisaillement, qui commande en particulier la pression nécessaire au redémarrage d'une installation (pipeline, puits) arrêtée, sur leur point d'écoulement ou température de figeage, sur leur point de cristallisation commençante, sur leur écoulement par simple gravité, sur les dépôts qui se forment au contact de parois froides. Toutes caractéristiques fort importantes pour l'extraction, le transport et le stockage des huiles, et dont on trouvera quelques illustrations dans les tests de laboratoires destinés à apprécier l'efficacité de ces additifs.

Les compositions antiparaffines selon l'invention sont constituées par des solutions de ces copolymères ou additifs à des concentrations allant de 2 à 90 % en poids, préférentiellement de 20 à 70 %, dans des solvants solubles dans les huiles brutes de pétrole que l'on veut traiter et qui peuvent être avantageusement les solvants utilisés lors de la polymérisation.

EXEMPLES

On décrit ci-après les modes d'obtention conduisant à diverses compositions de polymères pour servir d'exemples ou de contre-exemples, ainsi que les caractéristiques des polymères obtenus, lesquelles sont regroupées plus loin dans le tableau I.

Dans ces exemples, les acrylates monomères "Non-U" 18-22 sont des acrylates d'alcools à environ 18-22 atomes de carbone(commercialisés par Elf-Atochem S.A. sous le nom Norsocryl ® 18-22) dont la composition en poids est

$$0 < C12 - C16 < 10 \%$$

$$0 < C16 - C18 < 40 \%$$

$$50 < C20 - C22 < 100 \%$$

$$0 < C24 - C30 < 10 \%$$

"U"425 est une coupe d'acrylates monomères d'alcools obéissant à la loi de distribution "U", centrée sur 28-30 atomes de carbone, dont la masse moléculaire moyenne est 425. "U"550 désigne de même une coupe d'acrylates monomères d'alcools obéissant à la loi de distribution "U", centrée sur C40 dont la masse moléculaire moyenne est 550. m.18 désigne un méthacrylate de stéaryle réputé pur.

Les acrylates d'alcools sont obtenus par les méthodes bien connues de l'homme du métier, estérification directe ou transestérification catalysée par l'acétylacétonate de zirconium.

Dans le tableau I, les colonnes Mn, Mw et Pd reproduisent respectivement les masses moléculaires en nombre, en poids et le coefficient de polydispersité, rapport de Mw à Mn.

EXEMPLE I (Hors du champ de l'invention) - Polymère d'acrylate "Non-U" $C_{18}$-$C_{22}$ <Mw ~ 56.000)

Dans un réacteur de 1 m3, on introduit 438 kg d'acrylate de n-alkyle de longueur de chaîne moyenne $C_{18}$ à $C_{22}$ dans 359 kg de SOLVANTAR 340® (soit un milieu réactionnel à environ 55% d'extrait sec). La température du réacteur est portée successivement à 40°C sous vide avec barbotage d'azote et maintien 30 minutes, puis à 100°C en maintenant le barbotage d'azote. On additionne en continu, sur 1 h 30, 3 kg de perbenzoate de tertiobutyle (LUPEROX.P® ou TRIGONOX.C®) entre 100 et 105°c en suivant la viscosité du milieu laquelle est stable 2 à 3 heures après la fin de l'introduction de l'initiateur. Le temps total de polymérisation est de 6 heures pour un rendement de polymérisation supérieur à 98 %. Le produit est ensuite ramené à 37 % de matière active par addition de SOLVANTAR 340®.

EXEMPLE I bis (Hors du champ de l'invention) - Polymère d'acrylate $C_{18}$-$C_{22}$ (Mw ~ 119.000)

On reprend les mêmes conditions opératoires que celles qui sont décrites dans la composition I en remplaçant le SOLVANTAR 340® par le xylène.

EXEMPLE II (Hors du champ de l'invention) - Polymère d'acrylate $C_{18}$-$C_{22}$ (Mw ~ 104.000)

Dans un réacteur de 1 m3, on introduit 438 kg d'acrylate de n-alkyle de longueur de chaîne moyenne $C_{18}$ à $C_{22}$ dans 359 kg de SOLVANTAR 340®. La température du réacteur est portée successivement à 40°C sous vide avec barbotage d'azote et maintien 30 minutes, puis à 80°C en maintenant le barbotage d'azote. On additionne en continu, sur 1 h 30, 8 kg de dibenzoyle peroxyde (LUCIDOL CH 50®) entre 80 et 85°C en suivant la viscosité du milieu laquelle est stable 1 heure après la fin de l'introduction de l'initiateur. Le temps total de polymérisation est de 4 heures pour un rendement de polymérisation supérieur à 98 %. Le produit est ensuite ramené à 37 % de matière active par ajout de SOLVANTAR 340®.

EXEMPLE III (Hors du champ de l'invention) - Polymère d'acrylate $C_{18}$-$C_{22}$ <Mw ~ 128.000)

Dans un réacteur de 1 m3, on introduit 558 kg d'acrylate de n-alkyle de longueur de chaîne moyenne C18 à C22 dans 239 kg de SOLVANTAR 340® (milieu réactionnel à 70 % d'extrait sec). La température du réacteur est portée successivement à 40°C sous vide avec barbotage d'azote avec maintien 30 minutes, puis à 100°C en maintenant le barbotage d'azote. On additionne en continu, sur 1 h 30, 3 kg de perbenzoate de tertiobutyle (LUPEROX.P® ou TRIGONOX.C®) entre 100 et 105°C en suivant la viscosité du milieu laquelle est stable 2 à 3 heures après la fin de l'introduction de l'initiateur. Le temps total de polymérisation est de 6 heures pour un rendement de polymérisation supérieur à 97 %. Le produit est ensuite ramené à 37 % de matière active par addition de SOLVANTAR 340®.

EXEMPLE IV (Hors du champ de l'invention) - Polymère d'acrylate $C_{18}$-$C_{22}$ (Mw ~ 268.000)

Dans un réacteur de 1 m3, on introduit 518 kg d'acrylate de n-alkyle de longueur de chaîne moyenne $C_{18}$ à $C_{22}$ dans 222 kg de xylène (milieu réactif à 70% d'extrait sec). La température du réacteur est portée successivement à 40°C sous vide avec barbotage d'azote avec maintien 30 minutes à cette température, puis à 100°C en maintenant le barbotage d'azote. On additionne en continu, sur 1 h 30, 3 kg de perbenzoate de tertiobutyle (LUPEROX.P® ou TRIGONOX.C®) entre 100 et 105°C en suivant la viscosité du milieu laquelle est stable 2 à 3 heures après la fin de l'introduction de l'initiateur. Le tempe total de polymérisation est de 6 heures pour un rendement de polymérisation supérieur à 97 %. Le produit est ensuite ramené à 37 % de matière active par addition de xylène.

EXEMPLE V - Copolymère d'acrylate $C_{18}$-$C_{22}$ et d'acrylate de type "U" centré sur C28-30 - dans le tableau "U"425 (rapport 90/10 - Mw ~ 123.000) - Réaction réalisée dans le xylène (Extrait sec ~ 65 %).

EXEMPLE VI - Copolymère d'acrylate $C_{18}$-$C_{22}$ et d'acrylate "U"425 (rapport 80/20 - Mw - 134.000) - Réaction réalisée dans le xylène (Extrait sec 65 %).

EXEMPLE VI bis - Copolymère d'acrylate $C_{18}$-$C2_2$ et d'acrylate "U"425 (rapport 80/20 - Mw ~ 64.000) ~ Réaction réalisée dans le xylène (Extrait sec ~ 55 %).

EXEMPLE VII - Copolymère d'acrylate "Non-U" $C_{18}$-$C_{22}$ et d'acrylate "U"425 (rapport 70/30 - Mw ~ 146.000).

Dans un réacteur de 1 $m^3$, on introduit 363 kg d'acrylate de n-alkyle de longueur de chaîne moyenne $C_{18}$ à $C_{22}$ et 155 kg d'acrylate "U"425 (rapport 70/30) dans 279 kg de xylène (Extrait sec - 65 %). La température du réacteur est portée successivement à 40°C sous vide avec barbotage d'azote avec maintien 30 minutes, puis à 100 °C en maintenant le barbotage d'azote. On additionne en continu, sur 1 h 30, 3 kg de perbenzoate de tertiobutyle (LUPEROX.p® ou TRIGONOX.C®) entre 100 et 105°C en suivant la viscosité du milieu laquelle est stable 2 à 3 heures après la fin de l'introduction de l'initiateur. Le temps total de polymérisation est de 6 heures pour un rendement de polymérisation supérieur à 97 %. Le produit est ensuite ramené à 37 % de matière active par addition de xylène.

EXEMPLE VIII - Copolymère d'acrylate $C_{18}$-$C_{22}$ et d'acrylate "U"425 (rapport 50/50 ~ Mw non mesurable)

EXEMPLE IX - (Hors du champ de l'invention) Polymère d'acrylate "U"425 (Mw non mesurable)

On reprend les mêmes conditions opératoires que celles décrites dans l'exemple III. Le temps total de polymérisation est de 6 heures pour un rendement de polymérisation supérieur à 95 %. Le produit est ensuite ramené à 37 % de matière active par ajout de xylène.

EXEMPLE X - Copolymère d'acrylate $C_{18}$-$C_{22}$ et d'un acrylate "U"550 d'alcool "U" centré sur $C_{40}$ (rapport 90/10 - Mw ~ 162.000) - Réaction réalisée dans le xylène (extrait sec 65 %).

EXEMPLE XI - Copolymère d'acrylate $C_{18}$-$C_{22}$ et d'acrylate "U"550 (rapport 95/5 - Mw - 150.000) - Réaction réalisée dans le xylène (extrait sec ~ 65 %).

EXEMPLE XII - Copolymère de méthacrylate de stéaryle et d'acrylate "U"425 (rapport 70/30 - Mw ~ 317.000)

EXEMPLE XIII - Terpolymère de méthacrylate de stéaryle, d'acrylate $C_{18}$-$C_{22}$, et d'acrylate "U"425 (rapports 14 / 56 / 30 - Mw ~ 180.000)

EXAMPLE XIV ~ Terpolymère de méthacrylate de stéaryle, d'acrylate $C_{18}$-$C_{22}$, et d'acrylate "U"425(rapports 28 / 42 / 30 - Mw ~ 214.000)

EXEMPLE XV - Terpolymère de 4-vinylpyridine, d'acrylate $C_{18}$-$C_{22}$, et d'acrylate "U"425 (rapports 5 / 66,5 / 28,5 - Mw ~ 221.000)

EXEMPLE XVI (contre-exemple) : copolymère de 4-vinylpyridine et d'acrylate $C_{18}$-$C_{22}$, (rapports 5 / 95 - défaut de solubilité, Mw non mesurable)

EXEMPLE XVII (contre-exemple) : copolymère de 4-vinylpyridine et d'acrylate "U"425, (rapports 5 / 95- défaut de solubilité, Mw non mesurable)

EXEMPLES XVIII A XXII

Dans ces exemples, diverses compositions à 37 % d'additifs ont été incorporés aux huiles brutes - soit 20°C au dessus du point d'écoulement du brut sous agitation - à des concentrations allant de 100 à 1500 ppm. Les performances obtenues pour les polymères selon l'invention ont été comparées par rapport au témoin avec le Shellswimm 5X® et le Shellswimm 11T®, deux inhibiteurs de paraffines bien connus commercialisés par la SHELL OIL COMPANY.

TABLEAU I

| | Mn | Mw | Pd | Composition |
|---|---|---|---|---|
| Pol | | | | "Non-U"18-22 |
| I * | 22700 | 56000 | 2,5 | 100 |
| I bis * | 41600 | 119000 | 2,9 | 100 |
| II * | 41400 | 104000 | 2,5 | 100 |
| III * | 32500 | 128000 | 4,0 | 100 |
| IV * | 39100 | 268000 | 6,9 | 100 |
| Copol. | | | | "Non-U"18-22/ "U"425 |
| V | 38700 | 123000 | 3,2 | 90 /10 |
| VI | 39200 | 134000 | 3,4 | 80 / 20 |
| VI bis | 28100 | 64300 | 2,3 | 80 / 20 |
| VII | 36500 | 146000 | 4,0 | 70 / 30 |
| VIII | non mes. | non mes. | non mes. | 50 / 50 |

(suite)

| | Mn | Mw | Pd | Composition |
|---|---|---|---|---|
| Pol | | | | "Non-U"18-22 |
| Pol | | | | "U"425 |
| IX * | non mes. | non mes. | non mes. | 100 |
| Copol. | | | | "Non-"U"18-22/ "U"550 |
| X | 34000 | 162000 | 4,8 | 90/10 |
| XI | 42000 | 150000 | 3,6 | 95 / 5 |
| Copol. | | | | m.18 /"U"425 |
| XII | 190000 | 317000 | 1,7 | 70 / 30 |
| | Terpol. | | | m.18 / "Non-U"18-22/ "U"425 |
| XIII | 67000 | 180000 | 2,7 | 14 / 56 / 30 |
| XIV | 98000 | 214000 | 2,2 | 28 / 42 / 30 |
| Copol VP | | | | 4-VP / "Non-U"18-22/ "U"425 |
| XV | 440000 | 221000 | 5,0 | 5 / 66,5 / 28,5 |
| XVI Contre-exemples | non mes. | non mes. | non mes. | 5/95/2 |
| XVII Contre-exemples | non mes. | non mes. | non mes. | 5/8/95 |
| *Hors du champ de l'invention<br>† Contre-exemples | | | | |

Pour déterminer l'efficacité de ces polymères comme inhibiteurs de dépôt de paraffines, il existe plusieurs types d'approche parmi lesquels le comportement rhéologique des bruts et l'abaissement de leur point d'écoulement.

Les inhibiteurs de paraffines, en modifiant les phénomènes de cristallisation des huiles brutes, influent directement sur leurs caractéristiques rhéologiques. Il est clair que lors de l'utilisation industrielle de ces produits en production/ transport, les mesures rhéologiques rendront compte directement de leur performance.

On mesure en particulier la viscosité en fonction du cisaillement.

Les huiles brutes ont généralement un comportement rhéologique de type fluide plastique binghamien, c'est-à-dire que la tension de cisaillement varie linéairement avec le taux de cisaillement. A la différence des fluides newtoniens, il est nécessaire d'appliquer une force minimale pour mettre le fluide en mouvement. Cette force correspond à la tension minimale de cisaillement (yield value ou yield point). Cette mesure est couramment pratiquée sur les sites de production, car elle permet d'évaluer par un calcul simple la pression nécessaire au redémarrage d'une installation (pipe, puits) arrêtée. C'est cette pression de démarrage que les additifs inhibiteurs de paraffines sont capables d'abaisser considérablement, en désorganisant les réseaux cristallins en formation.

Pour mesurer cette yield value, on utilise un viscosimètre de type FANN, et l'on mesure la contrainte en fonction du gradient de vitesse appliqué au mobile. La courbe obtenue présente une asymptote, et il suffit d'extrapoler la droite asymptote à cisaillement nul pour obtenir la valeur du seuil d'écoulement :

$$\Delta P = 4L\frac{\tau}{D}$$

Le point d'écoulement ou température de figeage des bruts est également une caractéristique très importante, pour évaluer les propriétés rhéologiques d'une huile brute. Cette caractéristique est mesurée dans des conditions très précises dictées par la norme ASTM D97B. Il est généralement admis qu'un composé appartient à la classe des abaisseurs de point d'écoulement s'il est capable de provoquer un abaissement du point d'écoulement d'au moins 6°C pour une dose d'utilisation n'excédant pas 0,2 % en poids d'additif polymérique.

Les exemples non limitatifs suivants montrent les avantages apportés par l'invention sur différents bruts.

EXEMPLE XVIII : Modification du point d'écoulement d'un brut gabonais

L'huile testée est un brut de masse volumique 852 kg/m3 (15°C) et dont la teneur en paraffine (déterminée par chromatographie en phase gazeuse) est de 15 %. Son point d'écoulement, mesuré dans les conditions de la norme ASTM D 97 B, est de 18°C.

Dans le tableau II qui suit sont reportés les points d'écoulement obtenus avec deux teneurs de compositions à 37 % d'additifs décrits dans les exemples I à XV précédents et les écarts de température d'écoulement observés par rapport au brut non traité.

On remarque que l'optimum d'efficacité obtenu avec le copolymère VII (70/30) est considérablement amélioré avec le terpolymère XV qui peut être en somme considéré comme un copolymère entre la 4-vinylpyridine et le copolymère VII dans le rapport massique 5/95 (ou plus précisément 5/66,5/28,5), au point que l'abaissement de la température d'écoulement ne peut même plus être mesuré avec les tests communément adoptés (point d'écoulement inférieur à -45°C).

Tableau II

| composition à 37 % exemple | point d'écoulement (°C) | | ΔT (°C) | |
|---|---|---|---|---|
| | 100 ppm | 200 ppm | 100 ppm | 200 ppm |
| I * | + 6 | - 3 | - 12 | - 21 |
| I bis * | 0 | - 3 | - 18 | - 24 |
| II * | 0 | - 6 | - 18 | - 24 |
| III * | 0 | - 9 | - 18 | - 27 |
| IV* | - 6 | - 9 | - 24 | - 27 |
| Shellswimm 5X®a * | - 6 | - 9 | - 24 | - 27 |
| V | - 12 | - 15 | - 30 | - 33 |
| VI | - 15 | - 18 | - 33 | - 36 |
| VII | - 18 | - 21 | - 36 | - 39 |
| VIII | - 3 | - 6 | - 21 | - 24 |
| IX * | + 6 | + 3 | - 12 | - 15 |
| X | - 15 | - 15 | - 33 | - 33 |
| XI | -12 | - 12 | - 30 | - 30 |
| XII | + 3 | + 3 | - 15 | - 15 |
| XIII | - 15 | - 15 | - 33 | - 33 |
| XIV | - 9 | - 12 | - 27 | - 30 |
| Shellswimm 11T®b * | - 6 | - 12 | - 24 | - 30 |
| XV | <-27 | <-27 | -45 mini. | -45 mini |
| III + IX (70 / 30) | - 6 | - 15 | - 24 | - 33 |

a - le Shellswimm 5X® est une composition à 50% en poids d'un Polymère d'acrylate d'alcool "N=-U" $C_{18}$-$C_{22}$ commercialisé par Shell.
b - le Shellswimm 11T® est une composition à 50% en poids d'un copolymère acrylate d'alcool "Non-U" $C_{18}$-$C_{22}$ et de vinylpyridine commercialisé par Shell.
*Hors du champ de l'invention

Le graphique de la figure 2 montre l'abaissement du point d'écoulement de ce brut gabonais avec 100 ppm d'une composition à 37 % de copolymère acrylate "Non-U"18-22 / acrylate d'alcools "U" centrés sur C30 en fonction du pourcentage d'acrylate C30 dans le copolymère. Ce graphique montre clairement l'intérêt des copolymères comportant de 5 à 50 % d'acrylate d'alcools "U" centrés C30 sur ce type d'huile brute , et plus particulièrement celui du copolymère de l'exemple VII à 30% d'acrylate d'alcool "U" centré C30 ainsi que le seuil de 50 % au delà duquel on observe une

importante baisse d'efficacité en liaison avec la solubilité moindre du copolymère. Cette efficacité ne se retrouve pas à un niveau aussi considérable avec le mélange pondéral 70/30 correspondant des polymères respectivement "Non-U" C18-22 et "U" C30 pour les mêmes raisons.

Le graphique reproduit sur la figure 3 est la courbe du gain de point d'écoulement de ce même brut gabonais en fonction de l'addition de quantités variables des produits des exemples IV et VII (compositions à 37 %). Il permet d'apprécier l'amélioration obtenue avec la composition exemple VII de l'invention sur cette huile brute, comparativement à l'une des références actuelles du marché le Shellswimm 5X®. Un gain supplémentaire d'efficacité est obtenu grâce à l'ajout de 4-vinylpyridine selon l'exemple XV.

EXEMPLE XIX : Modification du point d'écoulement d'un brut égyptien I

L'huile testée est un brut de masse volumique 845 kg/m3 (15°C) et dont la teneur en paraffine est de 15 %. Son point d'écoulement, mesuré dans les conditions de la norme ASTM D97B, est de +15°C.

Sur le tableau III sont reportés les points d'écoulement obtenus avec différentes compositions à 37 % d'additif, pour deux teneurs, décrites dans l'exemple précédent et les écarts de température d'écoulement par rapport au brut non traité.

TABLEAU III

| composition à 37 % exemple | point d'écoulement (°C) | | ΔT (°C) | |
|---|---|---|---|---|
| | 1000 ppm | 1500 ppm | 1000 ppm | 1500 ppm |
| I* | + 6 | + 3 | - 9 | - 12 |
| IV * | - 3 | - 6 | - 18 | - 21 |
| Shellswimm 5X® * | - 3 | - 6 | - 18 | - 21 |
| VII | - 6 | - 9 | - 21 | - 24 |
| III + IX (70 / 30) | - 3 | - 6 | - 18 | - 21 |
| * Hors du champ de l'invention | | | | |

Mêmes remarques que pour l'exemple XVIII sur cette huile brute plus difficile à traiter, les doses utiles se situant ici entre 1000 et 1500 ppm.

EXEMPLE XX : Modification du point d'écoulement d'un brut Egyptien II.

L'huile testée est un brut de masse volumique 820 kg/m3 (15°C) et dont la teneur en paraffine est de 20-25 %. Son point d'écoulement est de 27-30°C.

Dans le tableau IV sont reportés les points d'écoulement obtenus avec différentes compositions à 37 % d'additif, pour deux teneurs, décrites dans l'exemple précédent et les écarts de température d'écoulement par rapport au brut non traité.

TABLEAU IV

| Composition à 37 % exemple | point d'écoulement (°C) | | ΔT (°C) | |
|---|---|---|---|---|
| | 1000 ppm | 1500 ppm | 1000 ppm | 1500 ppm |
| I * | + 21 | + 18 | - 9 | - 12 |
| IV * | + 15 | + 12 | - 15 | - 18 |
| Shellswimm 5X® * | + 12 | + 12 | - 18 | - 18 |
| VII | + 9 | + 6 | - 21 | - 24 |
| III + IX (70 / 30) | + 18 | + 8 | - 12 | - 21 |
| * Hors du champs de l'invention | | | | |

Mêmes remarques que pour l'exemple XIX sur cet autre exemple d'huile brute présentant un point d'écoulement de 30°c, les doses utiles se situant là encore entre 1000 et 1500 ppm.

Les courbes des figures 4 et 5 illustrent d'une part, l'amélioration de la susceptibilité thermique en viscosité d'une huile brute par addition de 1000 ppm de la composition VII (à 37 % de polymère), dont le bénéfice est un abaissement significatif de sa viscosité aux basses températures, d'autre part l'influence bénéfique sur le seuil d'écoulement (Yield Value) à 15°C.

EXEMPLE XXI : Modification du point d'écoulement d'un brut Egyptien III

L'huile testée est un brut de masse volumique 843 kg/m3 (15°C) et dont la teneur en paraffine est de 10,4 %. Son point d'écoulement est de + 9°C.

Sur le tableau V sont reportés les points d'écoulement obtenus avec 30 ppm de différentes compositions à 37% d'additif et les écarts de température d'écoulement par rapport au brut non traité.

Tableau

| Composition à 37 % exemple | point d'écoulement (°C) | ΔT (°C) |
|---|---|---|
| | 30 ppm | 30 ppm |
| IV * | 0 | - 9 |
| Shellswimm 5X® * | - 24 | - 33 |
| VII | - 27 | - 36 |
| Shellswimm 11T® * | - 12 | - 21 |
| XV | < - 24 | < - 33 |
| *Hors du champs de l'invention | | |

Ici encore, on note l'efficacité remarquable de l'additif VII et celle du terpolymère XV.

EXEMPLE XXII : Modification du point d'écoulement d'un brut Syrien

L'huile testée est un brut de masse volumique 870 kg/m3 (15°C) et dont la teneur en paraffine est de 6 %. Son point d'écoulement est de 18°C.

Sur le tableau VI sont reportés les points d'écoulement obtenus avec différentes compositions à 37 % d'additif décrites dans l'exemple précédent, pour deux teneurs, et les écarts de température d'écoulement par rapport au brut non traité.

TABLEAU VI

| Composition à 37 % exemple | point d'écoulement (°C) | | ΔT (°C) | |
|---|---|---|---|---|
| | 100 ppm | 200 ppm | 100 ppm | 200 ppm |
| I * | -3 | - 9 | - 21 | - 27 |
| IV * | - 9 | - 12 | - 27 | - 30 |
| Shellswimm 5X® * | - 6 | - 9 | - 24 | - 27 |
| VII | - 15 | - 21 | - 33 | - 39 |
| III + IX (70 / 30) | - 6 | - 12 | - 24 | - 30 |
| *Hors du champs de l'invention | | | | |

Ce nouvel exemple n'a d'autre but que de confirmer le large spectre d'activité des additifs selon l'invention et leur supériorité comparativement aux produits existants sur le marché.

Tous ces exemples montrent l'efficacité remarquable et inattendue des copolymères d'acrylates d'alcools gras primaires à distribution "U" et des compositions les contenant selon l'invention, quant à l'amélioration du comportement global des huiles brutes, avec notamment un fort abaissement du point d'écoulement et du seuil d'écoulement des huiles brutes additivées.

**Revendications**

1. Copolymères de (méth)acrylates d'alkyles de masse moléculaire en poids Mw mesurée par GPC comprise entre 5.000 et 500.000, de préférence entre 40.000 et 350.000 dont la polydispersité Pd peut varier entre 1,5 et 7,5, dont les motifs monomères (méth)acrylates qui participent à la chaîne polymère sont des motifs

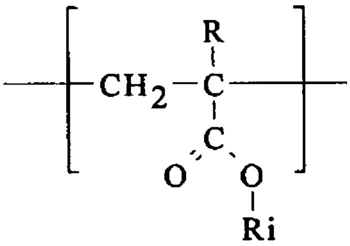

dans lesquels R est H ou CH3,
dans lesquels les Ri sont des restes d'alcools aliphatiques linéaires saturés Ri-OH où i représente le nombre de carbones de ces restes qui s'étale entre 10 et 50 atomes de carbones, et qui présentent la caractéristique de suivre une loi de répartition qui est la superposition
d'une loi de répartition "U" : distribution des chaînes alkyles à nombre pair de carbone en fonction de la longeur des chaînes dont l'enveloppe est très régulière, dont la masse moléculaire moyenne en poids Mw est comprise entre 375 et 840, dont la masse moléculaire moyenne en nombre Mn est comprise entre 375 et 700, et dont le facteur de polydispersité Mw / Mn est compris entre 1,0 et 1,2, dans laquelle les i sont des nombres pairs développés sur la partie haute 24-50 de l'intervalle, dont la valeur centrée est $i_u$,
et d'une loi de répartition "Non-U", dans laquelle les i sont des nombres pairs ou impairs développés sur la partie basse 10-22 de l'intervalle, et dont la valeur centrée $i_{nu}$ est telle que $i_{nu} < i_u$ ,
le rapport pondéral de l'ensemble des motifs

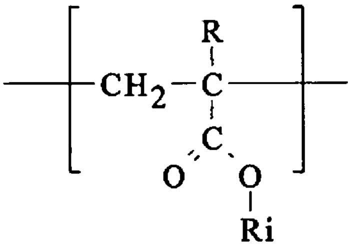

distribués selon la loi "U" à l'ensemble des motifs distribués selon la loi "Non-U" allant de 1:99 à moins de 50:50, et préférentiellement de 5:95 à moins de 50:50, comportant éventuellement de 1 à 10% de motifs dérivant de la 2- et/ou de la 4-vinylpyridine, comptés en poids par rapport aux copolymères.

2. Copolymères selon la revendication 1, dans lesquels les motifs "Non-U" sont des motifs (méth)acrylates d'alcools à 10-22 atomes de carbone, et les motifs "U" sont des motifs (méth)acrylates d'alcools à 24-50 atomes de carbone.

3. Procédé pour l'obtention des copolymères décrits sous la revendication 1 ou 2, **caractérisé en ce que** l'on provoque la polymérisation dans un solvant aliphatique et/ou aromatique de point d'ébullition inférieur à 300°C d'un mélange de monomères dans lequel une partie des monomères esters acryliques ou méthacryliques

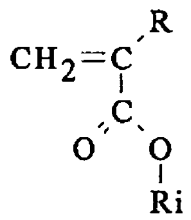

obéit à une loi de distribution "U" et la partie des monomères esters complémentaire obéit à une loi de distribution "Non-U", le rapport pondéral entre l'ensemble des esters distribués selon la loi "U" et l'ensemble des esters distribués selon la loi "Non-U" allant de 1:99 à moins de 50:50 et de préférence de 5:95 à moins de 50:50, et **en ce que** les monomères ainsi que les copolymères sont solubles dans ledit solvant.

**4.** Procédé selon la revendication 3, dans lequel le mélange des esters acryliques ou méthacryliques est obtenu par mélange préalable des alcools de chacune des catégories de distribution "U" et "Non-U", suivi de leur estérification par l'acide acrylique ou méthacrylique.

**5.** Procédé selon la revendication 3, **caractérisé en ce que** le solvant est le xylène.

**6.** Additif destiné à abaisser le point d'écoulement d'huiles brutes de pétrole et à en améliorer le comportement rhéologique, **caractérisé en ce qu'**il est constitué de copolymères décrits sous la revendication 1 ou 2 et de solvant aromatique et/ou aliphatique, la concentration pondérale du copolymère dans l'additif étant comprise entre 2 et 90 %, de préférence entre 20 et 70%.

**7.** Composition comprenant une huile brute de pétrole et un copolymère tel que décrit sous la revendication 1 ou 2, dans laquelle la teneur en copolymères est comprise entre 5 et 5.000 ppm, préférentiellement entre 10 et 2.000 ppm.

## Claims

**1.** Copolymers of alkyl (meth)acrylates having a weight-average molecular mass Mw measured by GPC of between 5000 and 500,000, preferably between 40,000 and 350,000, the polydispersity Pd of which may vary between 1.5 and 7.5 and in which the (meth)acrylate monomer units which participate in the polymer chain are units

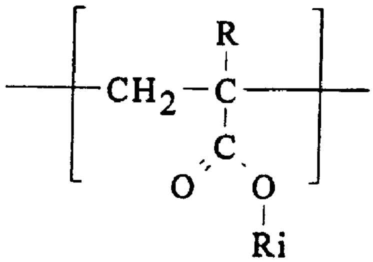

in which R is H or $CH_3$,
in which the groups Ri are saturated linear aliphatic alcohol residues Ri-OH where i represents the number of carbons of these residues, which ranges between 10 and 50 carbon atoms, and which have the feature that they follow a distribution law which is the superposition of a "U" distribution law: distribution of the alkyl chains with an even carbon number as a function of the length of the chain whose envelope is very uniform, whose weight-average molecular mass Mw is between 375 and 840, whose number-average molecular mass Mn is between 375 and 700, and whose polydispersity factor Mw/Mn is between 1.0 and 1.2, in which the values i are even numbers developed on the high part 24-50 of the range, the centre value of which is $i_u$, and
of a "non-U" distribution law, in which the values i are even or odd numbers developed on the low part 10-22 of the range and the centre value $i_{nu}$ of which is such that $i_{nu} < i_u$,
the weight ratio of all of the units

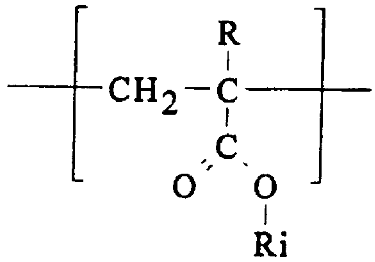

distributed according to the "U" law to all of the units distributed according to the "non-U" law ranging from 1:99 to less than 50:50, and preferably from 5:95 to less than 50:50 optionally containing from 1 to 10% by weight of units derived from 2- and/or 4-vinylpyridine relative to the copolymers.

2. Copolymers according to Claim 1, in which the "non-U" units are units of (meth)acrylates of alcohols containing 10-22 carbon atoms, and the "U" units are units of (meth)acrylates of alcohols containing 24-50 carbon atoms.

3. Process for the production of the copolymers described in Claim 1 or 2, **characterized in that** a mixture of monomers is made to polymerize in an aliphatic and/or aromatic solvent having a boiling point below 300°C, in which mixture one part of the acrylic or methacrylic ester monomers

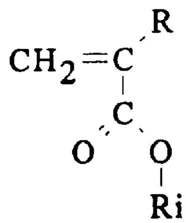

obeys a "U" distribution law and the complementary part of the ester monomers obeys a "non-U" distribution law, the weight ratio between the set of esters distributed according to the "U" law and the set of esters distributed according to the "non-U" law ranging from 1:99 to less than 50:50 and preferably from 5:95 to less than 50:50, and **in that** both the monomers and the copolymers are soluble in said solvent.

4. Process according to Claim 3, in which the mixture of the acrylic or methacrylic esters is obtained by prior mixing of the alcohols of each of the "U" and "non-U" distribution categories, followed by esterifying them with acrylic or methacrylic acid.

5. Process according to Claim 3, **characterized in that** the solvent is xylene.

6. Additive intended to lower the flow point of crude petroleum oils and to improve the rheological behaviour thereof, **characterized in that** it consists of copolymers described in Claim 1 or 2 and of aromatic and/or aliphatic solvent, the weight concentration of the copolymer in the additive being between 2 and 90%, preferably between 20 and 70%.

7. Composition comprising a crude petroleum oil and a copolymer as described in Claim 1 or 2, in which the copolymer content is between 5 and 5000 ppm, preferably between 10 and 2000 ppm.

**Patentansprüche**

1. Copolymere von Alkyl(meth)acrylaten mit einer mittels GPC gemessenen gewichtsmittleren Molmasse Mw zwischen 5000 und 500.000, vorzugsweise zwischen 40.000 und 350.000, wobei die Polydispersität Pd zwischen 1,5 und 7,5 variieren kann und die (Meth)acrylat-Monomereinheiten, die an der Polymerkette beteiligt sind, Einheiten

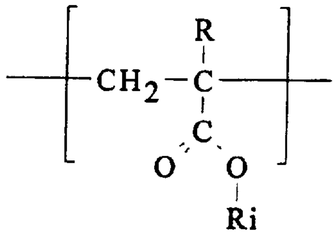

sind, in denen R für H oder CH3 steht,
in denen die Gruppen Ri für Reste von gesättigten linearen aliphatischen Alkoholen Ri-OH stehen, wobei i für die Zahl der Kohlenstoffatome dieser Reste steht, die zwischen 10 und 50 Kohlenstoffatomen liegt, und die das Merkmal aufweisen, daß sie einem Verteilungsgesetz folgen, bei dem es sich um die Überlagerung
eines "U"-Verteilungsgesetzes: Verteilung der Alkylketten mit gerader Kohlenstoffzahl in Abhängigkeit von der Länge der Ketten, wobei die Umhüllende sehr einheitlich ist, die gewichtsmittlere Molmasse Mw zwischen 375 und 840 liegt, die zahlenmittlere Molmasse Mn zwischen 375 und 700 liegt und der Polydispersitätsfaktor Mw/Mn zwischen 1,0 und 1,2 liegt, worin die Werte i für gerade Zahlen im oberen Teil 24-50 des Intervalls stehen, wobei der Mittenwert $i_u$ ist,
und eines "Nicht-U"-Verteilungsgesetzes, in dem die Werte i für gerade oder ungerade Zahlen im unteren Teil 10-22 des Intervalls stehen, wobei der Mittenwert $i_{nu}$ so beschaffen ist, daß $i_{nu} < i_u$, handelt,
wobei das Gewichtsverhältnis der Gesamtheit der Einheiten

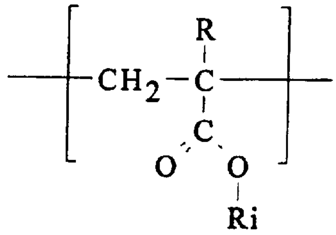

die nach dem "U"-Gesetz verteilt sind, zu der Gesamtheit der Einheiten, die nach dem "Nicht-U"-Gesetz verteilt sind, im Bereich von 1:99 bis weniger als 50:50 und vorzugsweise von 5:95 bis weniger als 50:50 liegt, die gegebenenfalls 1 bis 10 Gew.-% Einheiten, die sich von 2- und/oder 4-Vinylpyridin ableiten, bezogen auf die Copolymere, enthalten.

2. Copolymere nach Anspruch 1, wobei es sich bei den "Nicht-U"-Einheiten um (Meth)acrylateinheiten von Alkoholen mit 10-22 Kohlenstoffatomen handelt und es sich bei den "U"-Einheiten um (Meth)acrylateinheiten von Alkoholen mit 24-50 Kohlenstoffatomen handelt.

3. Verfahren zum Erhalt der in Anspruch 1 oder 2 beschriebenen Copolymere, **dadurch gekennzeichnet, daß** man in einem aliphatischen und/oder aromatischen Lösungsmittel mit einem Siedepunkt von weniger als 300°C eine Mischung von Monomeren polymerisiert, wobei ein Teil der Acryl- oder Methacrylsäureester-Monomere

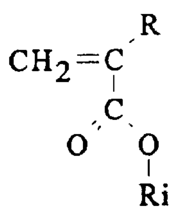

einem "U"-Verteilungsgesetz gehorcht und der komplementäre Teil der Estermonomere einem "Nicht-U"-Verteilungsgesetz gehorcht, wobei das Gewichtsverhältnis zwischen der Gesamtheit der gemäß dem "U"-Gesetz verteilten Ester und der Gesamtheit der gemäß dem "Nicht-U"-Gesetz verteilten Ester im Bereich von 1:99 bis weniger als

50:50 und vorzugsweise 5:95 bis weniger als 50:50 liegt, und die Monomere sowie die Copolymere in dem Lösungsmittel löslich sind.

**4.** Verfahren nach Anspruch 3, bei dem man die Mischung von Acryl- oder Methacrylsäureestern durch vorheriges Mischen von Alkoholen jeder der "U"- und "Nicht-U"-Verteilungskategorien und nachfolgende Veresterung mit Acryl- oder Methacrylsäure erhält.

**5.** Verfahren nach Anspruch 3, **dadurch gekennzeichnet, daß** es sich bei dem Lösungsmittel um Xylol handelt.

**6.** Additiv zur Erniedrigung des Pourpoints und zur Verbesserung des rheologischen Verhaltens von rohen Erdölen, **dadurch gekennzeichnet, daß** es aus in Anspruch 1 oder 2 beschriebenen Copolymeren und aromatischem und/oder aliphatischem Lösungsmittel besteht, wobei die Gewichtskonzentration des Copolymers in dem Additiv zwischen 2 und 90% und vorzugsweise zwischen 20 und 70% liegt.

**7.** Zusammensetzung, umfassend ein rohes Erdöl und ein Copolymer gemäß Anspruch 1 oder 2, wobei der Copolymerengehalt zwischen 5 und 5000 ppm und vorzugsweise zwischen 10 und 2000 ppm liegt.

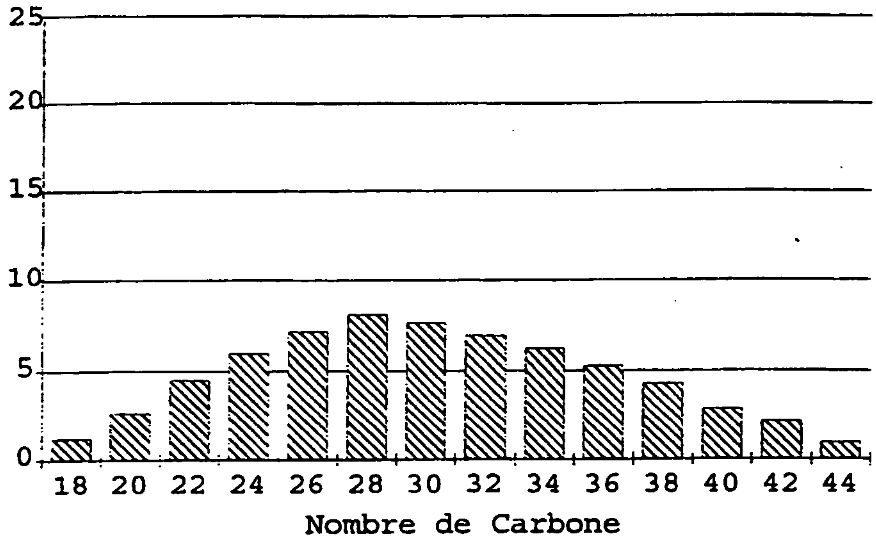
25
20
15
10
5
0
18 20 22 24 26 28 30 32 34 36 38 40 42 44
Nombre de Carbone

Figure 1

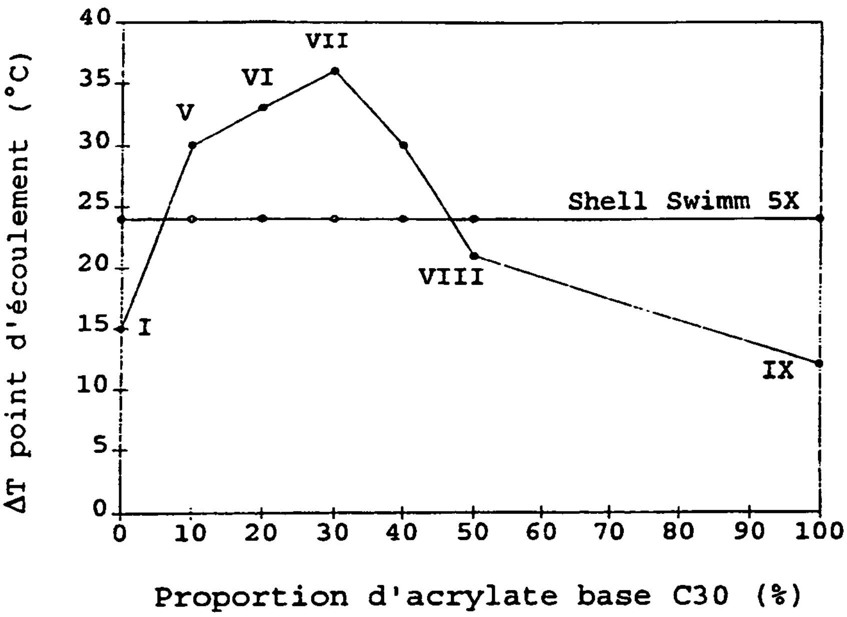

40
35
30
25
20
15
10
5
0
ΔT point d'écoulement (°C)
VII
VI
V
I
Shell Swimm 5X
VIII
IX
0 10 20 30 40 50 60 70 80 90 100
Proportion d'acrylate base C30 (%)


Fig. 2

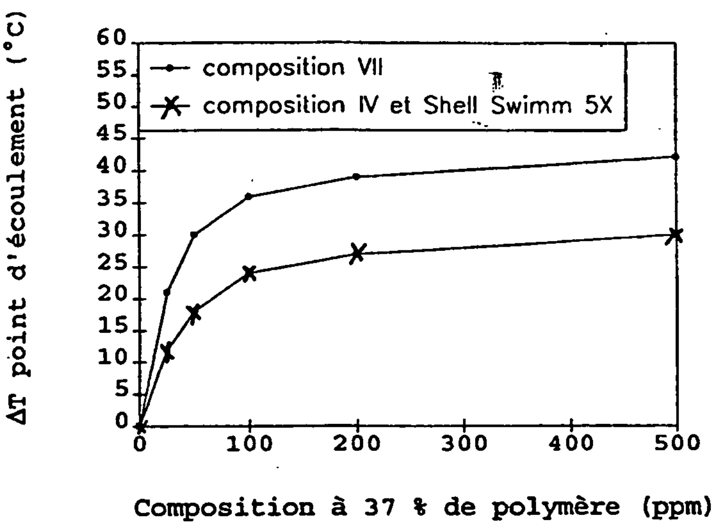
ΔT point d'écoulement (°C)
60
55
50
45
40
35
30
25
20
15
10
5
0
composition VII
composition IV et Shell Swimm 5X
0
100
200
300
400
500
Composition à 37 % de polymère (ppm)

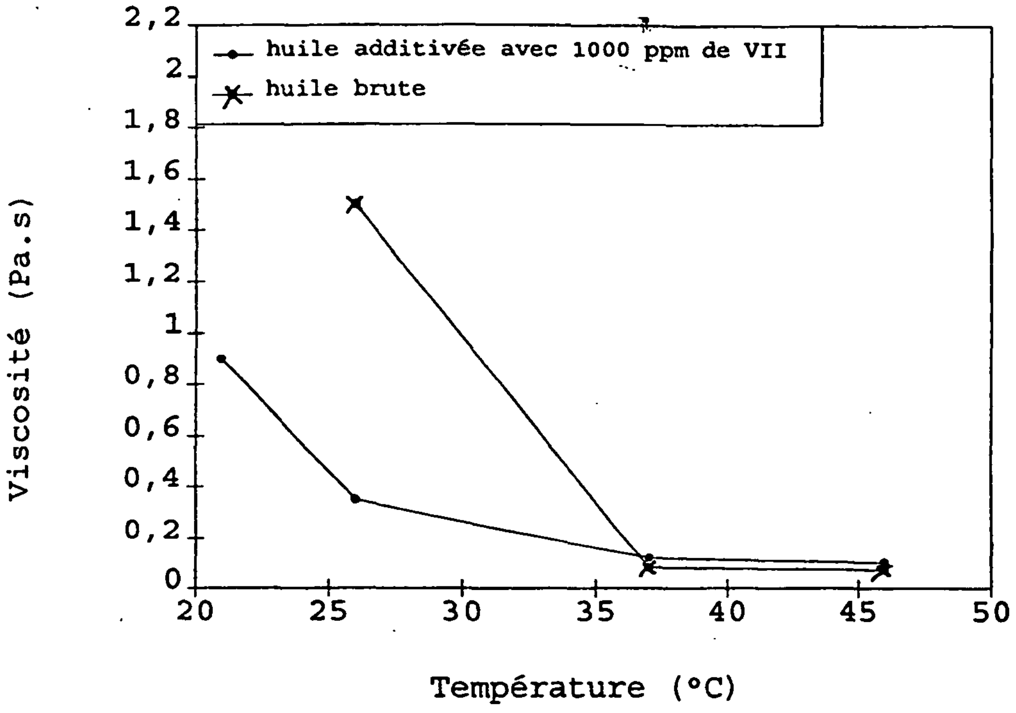
2,2
2
1,8
1,6
1,4
1,2
1
0,8
0,6
0,4
0,2
0
Viscosité (Pa.s)
huile additivée avec 1000 ppm de VII
huile brute
20
25
30
35
40
45
50
Température (°C)

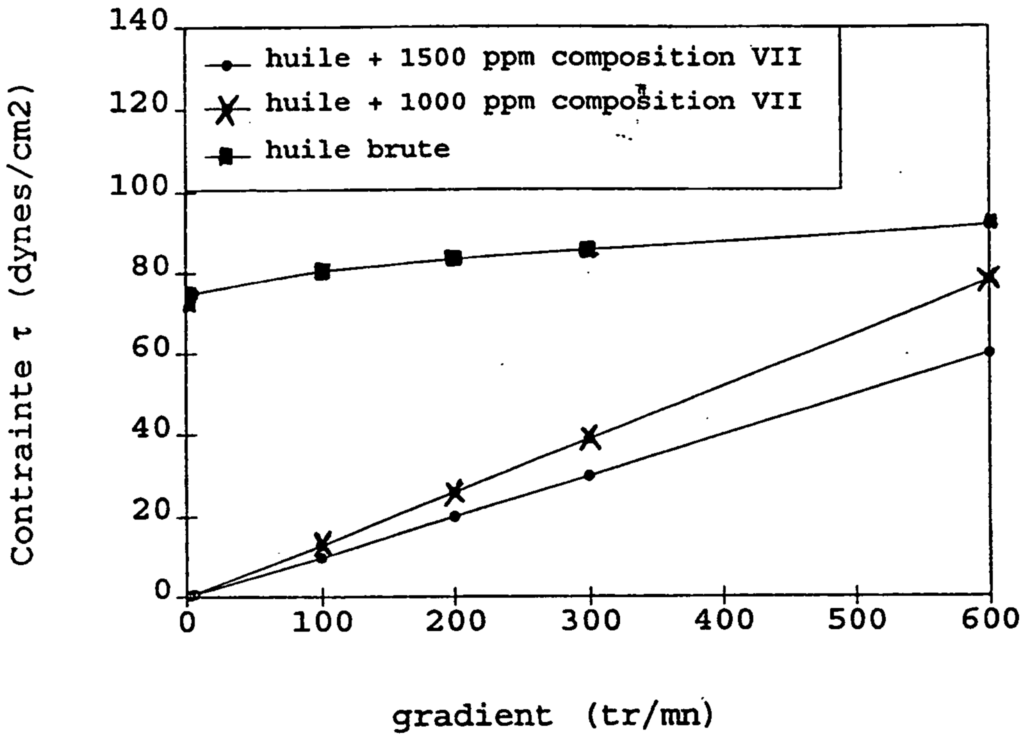
140
120
100
80
60
40
20
0
huile + 1500 ppm composition VII
huile + 1000 ppm composition VII
huile brute
Contrainte τ (dynes/cm2)
0
100
200
300
400
500
600
gradient (tr/mn)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 1575984
- US 2839512 A
- FR 2128589
- US 4426329 A